# FASCICULE DE BREVET EUROPEEN

(11) **EP 0 770 042 B1**
(45) Date de publication et mention de la délivrance du brevet: **11.07.2001**
(21) Numéro de dépôt: 96907533.2
(22) Date de dépôt: 14.03.1996
(51) Int. Cl.: C03C 4/02, C03C 4/08, C03C 3/087

(54) **FEUILLES DE VERRE DESTINEES A LA FABRICATION DE VITRAGES**
GLASSCHEIBE FÜR DIE HERSTELLUNG VON VERGLASUNGEN
GLASS SHEETS FOR PRODUCING GLAZING

(30) Priorité: 16.03.1995 FR 9503058
(43) Date de publication de la demande: 02.05.1997
(73) Titulaire: SAINT-GOBAIN GLASS FRANCE, 92400 Courbevoie (FR)
(72) Inventeur: COMBES, Jean-Marie, F-75018 Paris (FR); LISMONDE, Michel, 2 résidence de la Chancellerie, F-92400 Courbevoie (FR)
(74) Mandataire: Breton, Jean-Claude
(86) Numéro de dépôt international: FR9600394
(87) Numéro de publication internationale: WO9628394

(56) Documents cités:
- EP-A- 0 469 446
- EP-A- 0 616 883
- EP-A- 0 644 164
- US-A- 5 214 008
- CHEMICAL ABSTRACTS, vol. 104, no. 16, 21 Avril 1986 Columbus, Ohio, US; abstract no. 134739, XP002006161 & JP,A,60 215 546 (NIPPON SHEET GLASS CO.) 28 Octobre 1985

## Description

La présente invention concerne des feuilles de verre aptes à la réalisation de vitrages susceptibles d'être montés sur des véhicules automobiles et industriels et plus précisément à servir de vitrages latéraux.

Les vitrages utilisés dans ce dernier type d'application doivent satisfaire des exigences légales relatives à leur transmission lumineuse. Ainsi, les vitrages destinés à la réalisation des latéraux doivent présenter un facteur de transmission lumineuse globale sous illuminant A (TL_{A}) au moins égal à 70 %.

La surface vitrée des véhicules automobiles étant actuellement très importante, les exigences de la clientèle en matière de confort devenant de plus en plus grandes, les constructeurs de ces véhicules recherchent tous les moyens qui permettent d'atténuer la sensation de chaleur éprouvée par les passagers soumis au rayonnement solaire. Mais, parallèlement, les constructeurs de véhicules automobiles cherchent à alléger le plus possible tout l'équipement en verre.

Pour maintenir une transmission lumineuse élevée dans la partie visible du spectre tout en absorbant le plus possible le reste de l'énergie solaire, il est connu d'introduire du fer dans la composition du verre utilisé pour la fabrication des feuilles. Le fer est présent dans le verre à la fois sous la forme d'oxyde ferrique (Fe₂O₃) et d'oxyde ferreux (FeO). La présence de Fe₂O₃ permet d'absorber les radiations U.V. et celles qui possèdent de courtes longueurs d'ondes dans la partie visible du spectre ; à l'opposé, la présence de FeO permet d'absorber les radiations du proche I.R. et celles correspondant aux grandes longueurs d'ondes du domaine visible. Si l'augmentation de la teneur en fer, sous ses deux formes oxydées, accentue l'absorption des radiations aux deux extrémités du spectre visible, cet effet est obtenu au détriment de la transmission lumineuse.

A ce jour, différentes solutions ont été proposées pour utiliser au mieux l'aptitude des oxydes de fer à absorber les radiations en conservant néanmoins la plus grande transmission lumineuse possible.

Ainsi, le brevet EP-B-297 404 décrit et revendique des verres silico-sodo-calciques dont la teneur en fer total, exprimée sous la forme de Fe₂O₃ est comprise entre 0,45 et 0,65 %. Ces verres sont élaborés dans des conditions telles qu'au moins 35% et de préférence au moins 50 % de fer total est sous la forme de FeO. L'augmentation de la teneur en FeO ainsi obtenue permet d'accentuer l'absorption des verres dans l'infrarouge et de diminuer le facteur de transmission énergétique globale (T_{E}). Toutefois, lorsqu'un verre est élaboré en présence de soufre dans des conditions fortement réductrices, ce dernier prend une couleur ambre due à la formation de chromophores qui résultent de la réaction entre le soufre et le fer ferrique. Pour éviter cela il est donc nécessaire de supprimer les sulfates dans le mélange vitrifiable et, comme la teneur en soufre dans un verre n'est jamais nulle, de veiller à ce que le pourcentage de fer ferrique reste faible, ce qui conduit à limiter rigoureusement la teneur en fer total. Il s'ensuit que la capacité de ces verres à absorber les radiations U.V. est médiocre.

Il est également connu de fabriquer des verres qui, grâce à une teneur en fer total plus élevée que celle préconisée par le brevet européen mentionné ci-dessus, concilient une bonne transmission lumineuse et une bonne absorption des radiations infrarouges et ultraviolettes.

Ainsi, le brevet US-A-5 214 008 décrit des verres dénués d'oxyde cérique et autres oxydes de ce type, qui contiennent entre 0,7 et 0,95 % en poids de fer total exprimé sous la forme Fe₂O₃. Ces verres sont élaborés dans des fours classiques, à partir de matières premières vitrifiables ordinaires. Le degré d'oxydo-réduction du verre est contrôlé grâce à l'introduction de carbone et de sulfate de sodium dans le mélange vitrifiable.

Ce degré d'oxydo-réduction varie dans des limites précises telles que le fer sous la forme FeO dans le verre varie de 0,19 à 0,24 % en poids, ledit verre présentant sous une épaisseur comprise entre 3,7 et 4,8 millimètres un facteur de transmission lumineuse supérieur à 70 %, un facteur de transmission dans l'ultraviolet inférieur à 38 % et un facteur de transmission énergétique global inférieur à 44,5 %.

D'autres compositions de verre silico-sodo-calcique permettent d'obtenir, sous une épaisseur déterminée, un facteur de transmission lumineuse au moins égal à 70 % et une bonne absorption des radiations infrarouges et ultraviolettes. C'est notamment le cas de celles décrites dans les demandes de brevet EP-A-488 110 et WO-91/07356. Outre les oxydes de fer, les verres préconisés par ces demandes de brevet contiennent de l'oxyde cérique et de l'oxyde de titane.

La présente invention a pour objet une feuille de verre formée à partir d'un verre susceptible d'être nappé à la surface d'un bain de métal fondu, dont les caractéristiques de transmission sont principalement régies par la présence d'oxydes de fer et qui présente, par rapport à des feuilles de verre ayant un facteur de transmission lumineuse globale comparable, une capacité d'absorption des radiations infrarouges et ultraviolettes au moins équivalente à celle desdites feuilles mais sous une plus faible épaisseur.

La présente invention a également pour objet des feuilles de verre permettant de réaliser des vitrages latéraux pour véhicules automobiles dont l'épaisseur est plus faible que celle des vitrages latéraux connus, mais qui présentent néanmoins des caractéristiques de transmission comparables.

Le but de l'invention est atteint grâce à une feuille de verre formée d'un verre silico-sodo-calcique qui comprend, exprimé en pourcentages pondéraux, de 0,85 à 2 % de fer total exprimé sous la forme de Fe₂O₃, la teneur pondérale en fer ferreux sous la forme FeO étant comprise entre 0,21 et 0,40 %, ledit verre présentant sous une épaisseur comprise entre 2 et 3 mm un facteur de transmission lumineuse globale sous illuminant A (TL_{A}) au moins égal à 70 %, un facteur de transmission énergétique globale (T_{E}) inférieur à environ 50 % et un facteur de transmission de radiations ultraviolettes inférieur à environ 25% et constituée de toute autre caractéristique définie dans la revendication 1. Les valeurs de transmission lumineuse et energetique ont été déterminées selon la méthode Parry Moon Mass 2 ; la transmission dans l'ultraviolet a été déterminée selon la méthode définie par la norme ISO 9050.

Les verres utilisés pour fabriquer les feuilles de verre selon l'invention sont élaborés à partir de matières premières courantes auxquelles peut être ajouté du calcin dans des fours classiques utilisés dans le cadre de la technique du verre flotté. La fusion et l'affinage de ces verres a lieu dans des fours à flammes munis, éventuellement, d'électrodes assurant le chauffage du verre dans la masse par passage d'un courant électrique entre lesdites électrodes. Le degré d'oxydo-réduction des verres est contrôlé à l'aide d'agents oxydants, tel que le sulfate de sodium et d'agents réducteurs tel que du coke. La quantité de sulfate de sodium, introduite dans le mélange vitrifiable, considération prise des caractéristiques du four dans lequel ce mélange est fondu, est telle que la teneur en SO₃ dans le verre est généralement comprise entre 0,08 et 0,35 %. La teneur en agents réducteurs associée au sulfate, considération prise également des caractéristiques du four d'élaboration du verre, est calculée de manière à ce que le degré d'oxydo-réduction dudit verre soit maintenu entre des limites précises. Ces limites sont définies par les valeurs extrêmes du rapport entre la quantité de fer ferreux exprimé sous la forme FeO et la quantité de fer total exprimé sous la forme Fe₂O₃. Selon l'invention, ce rapport FeO/ Fe₂O₃ varie de 20 à 34 %.

Les verres utilisés pour fabriquer la feuille de verre selon l'invention peuvent contenir en outre jusqu'à environ 0,04 % d'un ou plusieurs des constituants suivants : CoO, Cr₂O₃, Se, TiO₂, MnO, NiO, CuO. Ces constituants peuvent provenir d'impuretés contenues dans certaines des matières premières vitrifiables utilisés et/ou du calcin de verre mélangé aux matières vitrifiables ; ils peuvent aussi être ajoutés volontairement au mélange vitrifiable pour donner, par exemple, un aspect teinté particulier.

Les verres utilisés pour fabriquer les feuilles de verre selon l'invention sont des verres silico-sodo-calciques qui sont essentiellement constitués par les constituants ci-après dans les teneurs définies par les limites suivantes exprimées en pourcentages pondéraux :

| | |
|---|---|
| SiO₂ | 64 à 75 % |
| Al₂O₃ | 0 à 5 % |
| B₂O₃ | 0 à 5 % |
| CaO | 2 à 15% |
| MgO | 0 à 5 % |
| Na₂O | 9 à 18 % |
| K₂O | 0 à 5 % |
| Fe₂O₃ (fer total exprimé sous cette forme) | 0,85 à 2 % |
| FeO | 0,21 à 0,40 % |
| CoO, Cr₂O₃, Se, TiO₂, MnO, NiO, CuO | 0 à 0,04 % |
| SO₃ | 0,08 à 0,35 % |

Outre les caractéristiques de transmission mentionnées précédemment, les verres utilisés pour fabriquer les feuilles de verre selon l'invention présentent généralement une teinte tirant sur le bleu-vert. Leur longueur d'onde dominante sous illuminant C est généralement comprise entre 490 et 510 nanomètres.

Dans le cadre de l'invention les feuilles de verre sont, de préférence, fabriquées à partir d'un verre silico-sodo-calcique qui comprend, exprimé en pourcentages pondéraux, de 0,95 à 2 % de fer total exprimé sous la forme Fe₂O₃, la teneur pondérale en fer ferreux sous la forme FeO étant comprise entre 0,29 et 0,40 %. Les feuilles, constituées d'un tel verre, présentent, sous une épaisseur inférieure à 3 mm et supérieure à 2 mm, un facteur de transmission énergétique globale (T_{E}) inférieure à environ 46 %.

Dans ce mode de réalisation, le verre utilisé pour fabriquer une feuille de verre selon l'invention, comprend, de préférence, une teneur en FeO qui représente entre 25 et 30 % de la teneur en fer total exprimée sous la forme Fe₂O₃.

Dans un autre mode de réalisation, les feuilles de verre selon l'invention sont, de préférence, fabriquées à partir d'un verre qui est essentiellement constitué par les constituants ci-après dans les teneurs définies par les limites suivantes exprimées en pourcentages pondéraux :

| | |
|---|---|
| SiO₂ | 68 à 75 % |
| Al₂O₃ | 0 à 3 % |
| B₂O₃ | 0 à 5 % |
| CaO | 2 à 10 % |
| MgO | 0 à 2 % |
| Na₂O | 9 à 18 % |
| K₂O | 0 à 8 % |
| Fe₂O₃(fer total exprimé sous cette forme) | 0,95 à 2 % |
| CoO, Cr₂O₃, Se, TiO₂, MnO, NiO, CuO | 0 à 0,04 % |
| FeO | 0,29 à 0,40 % |
| SO₃ | 0,08 à 0,35 % |

Les feuilles, constituées d'un verre ainsi défini, présentent, sous une épaisseur inférieure à 3 mm et supérieure à 2 mm, un facteur de transmission énergétique globale (T_{E}) inférieur à environ 46 %.

Dans ce dernier mode de réalisation le verre utilisé pour fabriquer une feuille de verre selon l'invention comprend, de préférence, une teneur en FeO qui représente entre 20 et 32 % de la teneur en fer total exprimée sous la forme Fe₂O₃.

D'une manière générale, le verre utilisé pour fabriquer une feuille de verre selon l'invention peut comprendre jusqu'à 1,5 % en poids de CeO₂ qui favorise l'absorption des radiations ultraviolettes.

Afin de mieux apprécier les avantages de la présente invention, des exemples de verre utilisés pour fabriquer des feuilles de verre selon l'invention donnés en annexe.

Ces verres peuvent être transformés en ruban continu en employant la technique du verre flotté. Les feuilles de verre selon l'invention sont obtenues par découpe d'un ruban qui présente des épaisseurs variant entre 1 et 3 millimètres. Ces feuilles de verre peuvent être utilisées seules ou associées pour réaliser des vitrages destinés à être montés sur des véhicules automobiles.

Pour réaliser des vitrages latéraux on peut utiliser une seule feuille de verre trempée dont l'épaisseur est inférieure à 3 millimètres. Sous une telle épaisseur, les feuilles de verres selon l'invention assurent une bonne absorption du rayonnement ultraviolet et un bon confort thermique et permettent de réaliser un allègement non négligeable de l'équipement verre du véhicule. On peut également réaliser un feuilleté comprenant, par exemple, deux feuilles d'environ 1 mm d'épaisseur séparées par une feuille intercalaire d'une matière organique telle, par exemple, qu'une feuille de polyvinylbutyral (PVB).

A l'instar d'autres vitrages, les vitrages obtenus à partir des verres selon l'invention peuvent être soumis au préalable à des traitement superficiels.

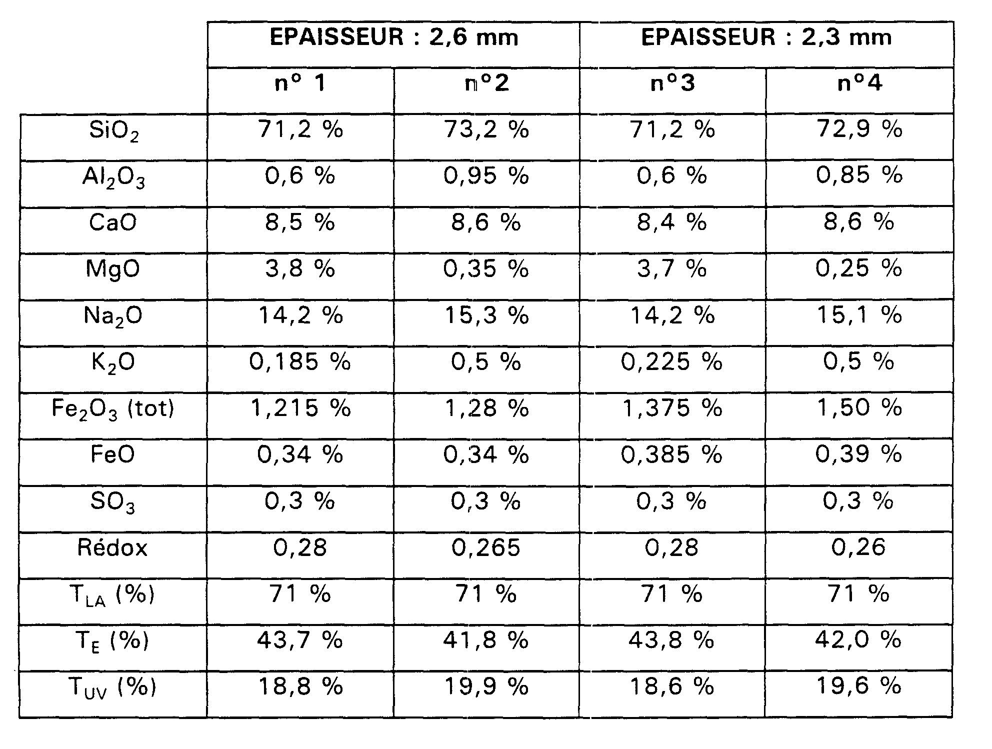

## Revendications

1. Feuille de verre formée d'un verre silico-sodo-calcique, **caractérisée en ce qu'**elle est formée d'un verre essentiellement constitué par les constituants ci-après dans les teneurs définies par les limites suivantes exprimées en pourcentages pondéraux :
| | |
|---|---|
| SiO₂ | 64 à 75 % |
| Al₂O₃ | 0 à 5 % |
| B₂O₃ | 0 à 5 % |
| CaO | 2 à 15 % |
| MgO | 0 à 5 % |
| Na₂O | 9 à 18 % |
| K₂O | 0 à 5 % |
| Fe₂O₃ (fer total exprimé sous cette forme) | 1 ,5 à 2 % |
| CoO, Cr₂O₃, Se, TiO₂, MnO, NiO, CuO | 0 à 0,04 % |
| FeO | 0,21 à 0,40 % |
| SO₃ | 0,08 à 0,35 % |
ledit verre présentant sous une épaisseur donnée, comprise entre 2 et 3 mm, un facteur de transmission lumineuse globale sous illuminant A (T_{LA}) au moins égal à 70%, un facteur de transmission énergétique globale (T_{E}) inférieure à environ 50% et un facteur de transmission de radiations ultraviolettes inférieur à environ 25%.

2. Feuille de verre selon la revendication 1, **caractérisée en ce qu'**elle est constituée d'un verre dans lequel la teneur en fer ferreux sous la forme FeO représente entre 20 et 34% de la teneur en fer total exprimée sous la forme de Fe₂O₃.

3. Feuille de verre selon la revendication 1, **caractérisée en ce qu'**elle est formée d'un verre dans lequel la teneur en fer ferreux sous la forme FeO représente entre 25 et 30% de la teneur en fer total exprimée sous la forme de Fe₂O₃.

4. Feuille de verre selon la revendication 1, **caractérisée en ce qu'**elle est formée d'un verre comprenant les constituants ci-après dans les teneurs définies par les limites suivantes exprimées en pourcentages pondéraux :
| | |
|---|---|
| SiO₂ | 68 à 75 % |
| Al₂O₃ | 0 à 3 % |
| B₂O₃ | 0 à 5 % |
| CaO | 2 à 10 % |
| MgO | 0 à 2 % |
| Na₂O | 9 à 18 % |
| K₂O | 0 à 8 % |
| Fe₂O₃ (fer total exprimé sous cette forme) | 1,5 à 2 % |
| CoO, Cr₂O₃, Se, TiO₂, MnO, NiO, CuO | 0 à 0,04 % |
| FeO | 0,29 à 0,40 % |
| SO₃ | 0,08 à 0,35 % |
ladite feuille de verre présentant sous une épaisseur inférieure à 3 mm et supérieure à 2 mm un facteur de transmission énergétique globale (T_{E}) inférieur à environ 46 %.

5. Feuille de verre selon la revendication 4, **caractérisée en ce qu'**elle est formée d'un verre dans lequel la teneur en fer ferreux sous la forme FeO représente entre 20 et 32 % de la teneur en fer total exprimée sous la forme Fe₂O₃.

6. Feuille de verre selon l'une des revendications précédentes, **caractérisée en ce qu'**elle est formée d'un verre comprenant jusqu'à 1,5 % en poids de CeO₂.

7. Vitrage **caractérisé en ce qu'**il est constitué d'au moins une feuille de verre dont l'épaisseur est comprise entre 1 et 3 mm et qui est formée d'un verre dont la composition chimique est définie par l'une quelconque des revendications précédentes.

8. Vitrage caractérisé en ce qu'il est constitué de deux feuilles de verre formées d'un verre dont la composition chimique est définie par l'une quelconque des revendications 1 à 8, séparées par une feuille intercalaire d'une matière organique.

## Claims

1. Glass sheet formed from a soda-lime-silica glass, characterized in that it is formed from a glass essentially constituted by the following constituents in the contents defined by the following limits, expressed as weight percentages:
| | |
|---|---|
| SiO₂ | 64 to 75% |
| Al₂O₃ | 0 to 5% |
| B₂O₃ | 0 to 5% |
| CaO | 2 to 15% |
| MgO | 0 to 5% |
| Na₂O | 9 to 18% |
| H₂O | 0 to 5% |
| Fe₂O₃ (total iron expressed in this form) | 1.5 to 2% |
| CoO, Cr₂O₃, Se, TiO₂, MnO, NiO, CuO | 0 to 0.04% |
| FeO | 0.21 to 0.40% |
| SO₃ | 0.08 to 0.35% |
said glass having, for a given thickness, between 2 and 3 mm, a total light transmission factor under illuminant A (T_{LA}) ac Least equal to 70%, a total energy transmission factor (T_{E}) below approximately 50% and an ultraviolet radiation transmission factor below approximately 25%.

2. Glass sheet according to claim 1, characterized in that it is constituted by a glass in which the ferrous iron content in the form FeO represents between 20 and 34% of the total iron content expressed in the form Fe₂O₃.

3. Glass sheet according to claim 1, characterized in that it is formed from a glass in which the ferrous iron content in the form FeO represents between 25 and 30% of the total iron content expressed in the form Fe₂O₃.

4. Glass sheet according to claim 1, characterized in that it is formed from a glass comprising the following constituents in the contents defined by the following limits, expressed as weight percentages:
| | |
|---|---|
| SiO₂ | 68 to 75% |
| Al₂O₃ | 0 to 3% |
| B₂O₃ | 0 to 5% |
| CaO | 2 to 10% |
| MgO | C to 2% |
| Na₂O | 9 to 18% |
| K₂O | 0 to 8% |
| Fe₂O₃ (total iron expressed in this form) | 1.5 to 2% |
| CoO, Cr₂O₃, Se, TiO₂, MnO, NiO, CuO | 0 to 0.04% |
| FeO | 0.29 to 0.40% |
| SO₃ | 0.08 to 0.35% |
said glass sheet having, for a thickness below 3 mm and above 2 mm, a total energy transmission factor (T_{E}) below approximately 46%.

5. Glass sheet according to claim 4, characterized in that it is formed from a glass in which the ferrous iron content in the form FeO represents between 20 and 32% of the total iron content expressed in the form Fe₂O₃.

6. Glass sheet according to one of the preceding claims, characterized in that it is formed from a glass comprising up to 1.5 wt.% CeO₂.

7. Glazing, characterized in that it is constituted by at least one glass sheet, whose thickness is between 1 and 3 mm and formed from a glass whose chemical composition is defined by any one of the preceding claims.

8. Glazing, characterized in that it is constituted by two glass sheets formed from a glass whose chemical composition is defined by any one of the claims 1 to 6, separated by a spacer sheet of an organic material.

## Patentansprüche

1. Glasscheibe, die aus einem Kalk-Natron-Silicatglas gebildet ist, **dadurch gekennzeichnet, dass** sie aus einem Glas gebildet ist, das im Wesentlichen aus folgenden Bestandteilen mit Anteilen besteht, die durch nachstehende, in Gewichtsprozenten angegebenen Grenzen definiert sind:
| | |
|---|---|
| SiO₂ | 64 bis 75 %, |
| Al₂O₃ | 0 bis 5 %, |
| B₂O₃ | 0 bis 5 %, |
| CaO | 2 bis 15 %, |
| MgO | 0 bis 5 %, |
| Na₂O | 9 bis 18 %, |
| K₂O | 0 bis 5 %, |
| Fe₂O₃ (Gesamteisen, angegeben als) | 1,5 bis 2 %, |
| CoO, Cr₂O₃, Se, TiO₂, MnO, NiO, CuO | 0 bis 0,04 %, |
| FeO | 0,21 bis 0,40 %, |
| SO₃ | 0,08 bis 0,35 %, |
wobei das Glas bei einer gegebenen Dicke von zwischen 2 und 3 mm einen globalen Lichttransmissionsgrad für Normlichtart A (T_{LA}) von mindestens 70 %, einen globalen Strahlungstransmissionsgrad (T_{E}) von unter etwa 50 % und einen UV-Transmissionsgrad von unter etwa 25 % aufweist.

2. Glasscheibe nach Anspruch 1, **dadurch gekennzeichnet, dass** sie aus einem Glas besteht, dessen Eisen(II)-Gehalt in Form von FeO zwischen 20 und 34 % des in Form von Fe₂O₃ angegebenen Gesamteisengehalts ausmacht.

3. Glasscheibe nach Anspruch 1, **dadurch gekennzeichnet, dass** sie aus einem Glas gebildet ist, dessen Eisen(II)-Gehalt in Form von FeO zwischen 25 und 30 % des in Form von Fe₂O₃ angegebenen Gesamteisengehalts ausmacht.

4. Glasscheibe nach Anspruch 1, **dadurch gekennzeichnet, dass** sie aus einem Glas gebildet ist, das folgende Bestandteile mit Anteilen umfasst, die durch nachstehende, in Gewichtsprozenten angegebenen Grenzen definiert sind:
| | |
|---|---|
| SiO₂ | 64 bis 75 %, |
| Al₂O₃ | 0 bis 3 %, |
| B₂O₃ | 0 bis 5 %, |
| CaO | 2 bis 10 %, |
| MgO | 0 bis 2 %, |
| Na₂O | 9 bis 18 %, |
| K₂O | 0 bis 8 %, |
| Fe₂O₃ (Gesamteisen, angegeben als) | 1,5 bis 2 %, |
| CoO, Cr₂O₃, Se, TiO₂, MnO, NiO, CuO | 0 bis 0,04 %, |
| FeO | 0,29 bis 0,40 %, |
| SO₃ | 0,08 bis 0,35 %, |
wobei die Glasscheibe bei einer Dicke von unter 3 mm und über 2 mm einen globalen Strahlungstransmissionsgrad (T_{E}) von unter etwa 46 % aufweist.

5. Glasscheibe nach Anspruch 4, **dadurch gekennzeichnet, dass** sie aus einem Glas gebildet ist, dessen Eisen(II)-Gehalt in Form von FeO zwischen 20 und 32 % des in Form von Fe₂O₃ angegebenen Gesamteisengehalts ausmacht.

6. Glasscheibe nach einem der vorhergehenden Ansprüche, **dadurch gekennzeichnet, dass** sie aus einem Glas gebildet ist, das bis zu 1,5 Gew.-% CeO₂ enthält.

7. Verglasung, **dadurch gekennzeichnet, dass** sie aus mindestens einer Glasscheibe besteht, deren Dicke zwischen 1 und 3 mm beträgt und welche aus einem Glas gebildet ist, dessen chemische Zusammensetzung durch einen der vorhergehenden Ansprüche definiert ist.

8. Verglasung, **dadurch gekennzeichnet, dass** sie aus zwei durch eine Zwischenfolie aus einem organischen Material getrennten Glasscheiben besteht, die aus einem Glas gebildet sind, dessen chemische Zusammensetzung durch einen der Ansprüche 1 bis 8 definiert ist.
